# EUROPÄISCHE PATENTSCHRIFT

(11) **EP 0 994 759 B1**
(45) Veröffentlichungstag und Bekanntmachung des Hinweises auf die Patenterteilung: **27.03.2002**
(21) Anmeldenummer: 98942498.1
(22) Anmeldetag: 07.07.1998
(51) Int. Cl.: B23B 51/04

(54) **LOCHSÄGENEINRICHTUNG MIT AUSWERFEREINRICHTUNG**
COMPASS SAW DEVICE WITH EJECTOR FACILITY
ENSEMBLE DE SCIE D'ENTREE AVEC DISPOSITIF D'EJECTION

(30) Priorität: 09.07.1997 DE 29712056 U; 04.10.1997 DE 29717694 U
(43) Veröffentlichungstag der Anmeldung: 26.04.2000
(73) Patentinhaber: Krieg, Siegmund, 74629 Pfedelbach (DE); Ehmann, Karl, 74626 Bretzfeld (DE)
(72) Erfinder: Krieg, Siegmund, 74629 Pfedelbach (DE); Ehmann, Karl, 74626 Bretzfeld (DE)
(74) Vertreter: Clemens, Gerhard, Dr.-Ing.
(86) Internationale Anmeldenummer: DE9801869
(87) Internationale Veröffentlichungsnummer: WO9902292

(56) Entgegenhaltungen:
- CA-A- 1 230 763
- FR-A- 1 062 899
- FR-A- 2 668 405
- US-A- 2 349 400
- US-A- 4 755 087
- US-A- 5 226 762

## Beschreibung

Die vorliegende Erfindung betrifft eine Auswerfereinrichtung für eine Lochsägeneinrichtung, die um eine Drehachse mittels Maschinen wie Handbohr-, Säulenbohr-, Drehmaschinen, Bohranlagen oder dergleichen Werkzeugmaschinen rotierend antreibbar ist, wobei die Lochsägeneinrichtung folgende Merkmale besitzt: gegebenenfalls ein, um die Drehachse drehbares zentrales Führungs- beziehungsweise Zentrierelement, insbesondere Bohrer, eine Aufnahmeeinheit mit Aufnahmeschaft, eine um die Drehachse drehbare zylindrische Lochsäge mit einer in Schneidrichtung gesehen vorderseitigen Schneide und einem rückseitigen Boden, und die Auswerfereinrichtung folgende Merkmale besitzt: eine Führungsprofileinheit, die an der Lochsägeneinrichtung und an der Maschine direkt oder indirekt befestigbar ist, einer längsverschieblich an der Führungsprofileinheit gelagerten Schiebeeinheit und zumindest einer an der Schiebeeinheit vorhandenen Auswerfereinheit, die den Boden und/oder die Wandung der Lochsägeneinheit durchdringt, wobei die vordere Stirnfläche der Auswerfereinheit auf das innerhalb der Lochsäge befindliche Material bei Betätigung der Auswerfereinrichtung schiebend einwirkt, wobei die Führungsprofileinheit als ein um die Drehachse drehbar anordenbares Stabprofil, insbesondere Stabrundprofil, ausgebildet ist mit einer ersten Anschlußeinheit zum Anschließen an die Lochsägeneinrichtung und einer zweiten Anschlußeinheit zum direkten oder indirekten Anschließen einer Maschine, die Führungsprofileinheit in ihrem der Lochsäge zugewandten Endbereich eine Vorsprungseinheit mit durchgehenden Ausnehmungen zum Führen der Auswerfereinheit beziehungsweise der Auswerferstifte besitzt.

### STAND DER TECHNIK

Lochsägeneinrichtungen werden in vielen Bereichen der Produktion und beim Handwerker ständig eingesetzt. Sie dienen zum Schneiden von Löchern in beispielsweise Metall, mit Nägeln durchsetztem Holz, Sperrholz, Faserplatten, Kunststoffen, Rohren, Platten und Asbest. Am häufigsten werden derartige Lochsägeneinrichtungen verwendet auf Ständerbohrmaschinen und niedertourigen Handbohrern sowie Drehmaschinen. In der Praxis ergibt sich häufig das Problem, daß sich der schichtweise vorhandene Bohrabfall im Innern der Lochsäge verspannt beziehungsweise verkeilt. Die bekannten Lochsägeneinrichtungen weisen zur Entfernung des Bohrabfalls in ihrer Außenwandung Schlitze auf, durch die dann mittels Schraubenziehern oder dergleichen Werkzeugen versucht wird, den Bohrabfall aus dem Innern der Lochsäge herauszubringen, was im Einzelfall eine manuell aufwendige Tätigkeit bedeutet. Eine alternative Ausgestaltung einer bekannten Lochsägeneinrichtung zeichnet sich dadurch aus, daß innerhalb der Lochsäge eine Spiralfeder angeordnet ist, die den Bohrabfall herausrücken soll. Beide bekannte Ausführungsformen sind hinsichtlich ihrer praktischen Handhabbarkeit und dauerhaften Funktionalität nicht zufriedenstellend.

Die US-A-2349400 als nächstliegender Stand der Technik zeigt eine Auswerfereinrichtung für eine Lochsägeneinrichtung, die an ein drehendes Werkzeug angeschlossen werden kann. Insgesamt sind zwei Auswerferstifte vorhanden, die an eine Ringeinheit angeschlossen sind und manuell zum Ausstoßen des innerhalb der Lochsäge befindlichen Materials dienen. Die Schiebeeinheit in Verbindung mit den Auswerfereinheiten ist über eine in einer Nut entlang der Führungsprofileinheit eingreifenden Feder gelagert. Zum Wechseln der Lochsäge muß die gesamte Auswerfereinheit aus dem Werkzeug ausgebaut werden.

Die FR-A-2668405 beschreibt eine Auswerfereinrichtung mit einer Führungsprofileinheit, einer Schiebeeinheit und einer Auswerfereinheit, wobei zwischen der Auswerfereinrichtung und der Lochsägeneinrichtung eine Spiralfeder geschaltet ist, die für ein drückendes Anliegen der Auswerfereinheit an dem innerhalb der Lochsägeneinrichtung befindlichen Material sorgt.

### DARSTELLUNG DER ERFINDUNG

Ausgehend von dem genannten Stand der Technik liegt der vorliegenden Erfindung das technische Problem beziehungsweise die Aufgabe zugrunde, eine Auswerfereinrichtung für eine Lochsägeneinrichtung der eingangs genannten Art zu schaffen, die ein problemloses Auswerfen des Bohrabfalls ermöglicht, die eine einfache und wirtschaftlich herstellbare Konstruktion mit einer dauerhaft zuverlässigen Funktion aufweist, die problemlos an bereits bestehenden Lochsägeneinrichtungen nachgerüstet werden kann und die ein einfaches Wechseln der Lochsägeneinrichtung ermöglicht.

Die erfindungsgemäße Auswerfereinrichtung für eine Lochsägeneinrichtung der eingangs genannten Art ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Auswerfereinrichtung zeichnet sich demgemäß dadurch aus, daß die Schiebeeinheit als eine das Stabprofil umgebende Schiebehülse ausgebildet ist, die relative Position zwischen Schiebeeinheit und Führungsprofileinheit einstellbar und lösbar fixierbar ist, wobei die Schiebeeinheit als Schiebehülse innenseitig einen Anschlag besitzt, an dem in Ruheposition eine auf einem Gewinde der Führungsprofileinheit vorhandene Mutter anschlägt.

Eine besonders bevorzugte Ausgestaltung der erfindungsgemäßen Lochsägeneinrichtung die hinsichtlich des Auswerfers keinerlei Probleme mit sich bringt, zeichnet sich dadurch aus, daß die Auswerfereinheit mit ihrer Stirnfläche vom Niveau des Bodens bis über das Niveau der Schneide der Lochsäge hinaus verschiebbar ist.

Mit einer derartigen Auswerfereinrichtung ist ein Auswerfen des innerhalb der Lochsäge befindlichen Bohrabfalls problemlos möglich. Ein einfacher Verschiebmechanismus mit Auswerfereinheiten kann manuell betätigt werden, wodurch sich der sich in der Lochsäge befindliche Bohrabfall problemlos herausbefördern läßt.

Eine besonders bevorzugte Ausgestaltung der erfindungsgemäßen Auswerfereinrichtung zeichnet sich dadurch aus, daß die Auswerferstifte so angeordnet sind, daß sie die üblicherweise bei einer Lochsäge im Boden vorhandenen Mitnehmerausnehmungen durchdringen können.

Gemäß einer Weiterbildung ist es möglich, daß die Stirnfläche bevorzugt als Ringeinheit, Flächeneinheit oder Gittereinheit, insbesondere als Teilkreis- oder Kreisringscheibe, ausgebildet sein kann.

Um bereits bestehende Lochsägenvorrichtungen mit einer erfindungsgemäßen Auswerfereinrichtung nachzurüsten, ist diese als Adaptereinheit ausgebildet, die sich dadurch auszeichnet, daß die erste Anschlußeinheit eine Aufnahme für den Schaft einer Aufnahmeeinheit eines Führungsbohrers mit Lochsäge aufweist und die zweite Anschlußeinheit einen Schaft der Aufnahmeeinheit zum Einspannen einer Maschine aufweist. Dadurch wird die Adaptereinheit in einfacher Art und Weise zwischen der bekannten Lochsägenvorrichtung und der Maschine in einfacher Art und Weise zwischengeschaltet.

Die Schiebeeinheit und/oder die Auswerfereinheiten können aus Metall, Gummi oder Kunststoff bestehen.

Eine hinsichtlich der Handhabung besonders bevorzugte Ausgestaltung zeichnet sich dadurch aus, daß die Schiebeeinheit zumindest bereichsweise einen Bereich erhöhter Oberflächenrauhigkeit, insbesondere Riffelung, Rillung, Noppung oder dergleichen, aufweist.

Die Betätigung der Schiebehülse kann manuell erfolgen. Es ist jedoch auch denkbar, daß zum Verschieben der Schiebehülse im Einsatzfall elektromechanische, pneumatische oder hydraulisch betriebene Aggregate eingesetzt werden.

In einer konstruktiv besonders einfachen Ausgestaltung ist die Vorsprungseinheit als umlaufender Bund ausgebildet, der insbesondere durchgehende Bohrungen für die Auswerferstifte besitzt.

Durch die einstellbare Ruheposition der Schiebeeinheit und damit der Auswerfereinheit kann gemäß einer besonders bevorzugten Ausgestaltung die Ruheposition so eingestellt werden, daß die Auswerfereinheit gerade in die Ausnehmungen am Boden der Lochsäge hineinragt und damit eine zusätzliche Mitnehmerfunktion für die Lochsäge darstellt.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie eine vorteilhafte Ausführungsform und Weiterbildung derselben wird im folgenden anhand des in der Zeichnung dargestellten Beispiels näher beschrieben und erläutert. Es zeigen:

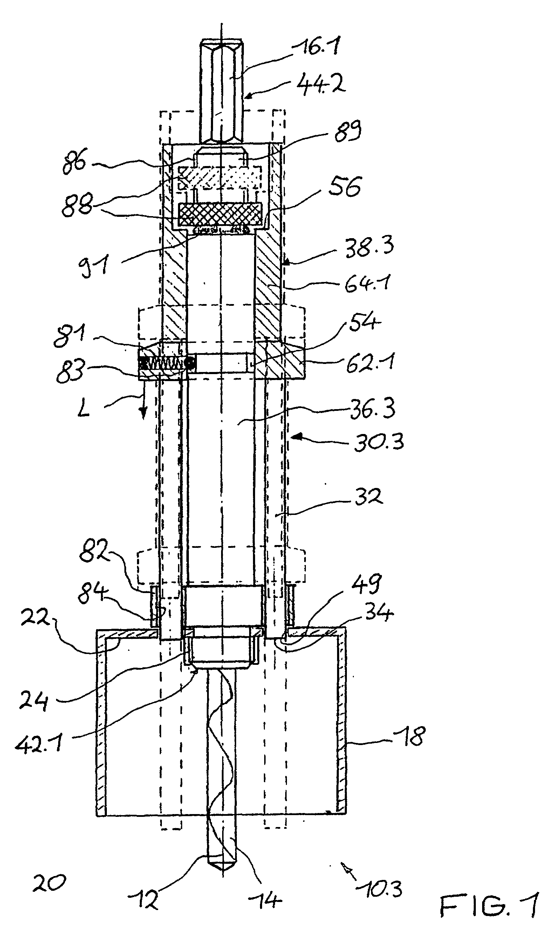

Fig. 1 schematischer Schnitt durch eine Lochsägeneinrichtung mit einstellbarer Ruheposition der Auswerfereinheit.

### WEGE ZUM AUSFÜHREN DER ERFINDUNG

In Fig. 1 ist eine Lochsägenvorrichtung 10.3 dargestellt, die um eine Drehachse 12 rotierbar ausgebildet ist. Die Rotation der Drehachse 12 wird beispielsweise durch eine nicht näher dargestellte Bohrmaschine bewirkt. Der Anschluß der Lochsägenvorrichtung 10.3 an die Maschine erfolgt über eine Aufnahmeinheit mit einem Aufnahmeschaft 16.1 der in einer an der Maschine entsprechenden Aufnahme verspannt wird. In Bohrrichtung ist eine Auswerfereinrichtung 30.3 mit einer Führungsprofileinheit 36.3 und einer auf der Führungsprofileinheit 36.3 verschiebbar angeordneten Schiebeeinheit 38.3 mit zwei Auswerfereinheiten 32 vorhanden.

Die Führungsprofileinheit 36.3 ist als Rundstabelement aus Metall ausgebildet. Die Schiebeeinheit 38.3 ist als Schiebehülse ausgebildet. Die Auswerfereinheiten 32 sind als Auswerferstifte 32 ausgebildet.

Ein Führungsbohrer 14 liegt genau in der Drehachse 12 und besitzt einen nach vorne über das Niveau einer Schneide 20 überkragenden Bereich. Der Führungsbohrer 14 dient zum Zentrieren beim Ansatz der Lochsägenvorrichtung 10.3. An die Führungsprofileinheit 36.3 ist oberseitig eine zylindrische Lochsäge 18 angeschlossen, die in ihrem vorderen Stirnendbereich eine kreisförmige Schneide 20 und in ihrem rückwärtigen Bereich einen Boden 22 besitzt. Der Boden 22 weist eine zentrale Gewindebohrung 24 mit verstärktem Wandbereich auf.

Die Führungsprofileinheit 36.3 besitzt in ihrem oberen Stirnbereich eine erste Anschlußeinheit 42.1, die als Vorsprungseinheit mit Außengewinde ausgebildet ist, und in die Gewindebohrung 24 eingeschraubt ist.

Die in Richtung der Drehachse 12 verschiebliche Schiebeeinheit 38.3 besitzt oberseitig einen um die Führungsprofileinheit 36.3 umlaufende Ringschulter 62.1.

Oberseitig sind an der Ringschulter 62.1 zwei symmetrisch zur Drehachse 12 gegenüberliegende Auswerferstifte 32 befestigt, die Ausnehmungen 49 am Boden 22 der Lochsäge 18 durchdringen, wobei die Länge der Ausnehmerstifte 32 so bemessen ist, daß im betätigten Zustand der Auswerfereinrichtung 30.3 deren vordere Stirnseite 34 zumindest über das Niveau der Schneide 20 hinausragen. Die Ausnehmungen 49 sind bei vielen am Markt befindlichen Lochsägen 18 bereits vorhanden, da diese üblicherweise als Mitnehmerausnehmungen zum direkten Anschließen der Aufnehmereinheit an die Lochsägeeinheit dienen. Aufgrund der gewählten Geometrie der Auswerferstifte 32 der Schiebeeinheit 38.3 kann die erfindungsgemäße Auswerfereinrichtung 30.1 problemlos an bereits eingesetzten Lochsägen adaptiert werden.

Die in Fig. 1 schematisch dargestellte Ausführungsvariante der Auswerfereinrichtung 30.3 ist als Adaptereinrichtung ausgebildet, die in einfacher Art und Weise zwischen eine bestehende Lochsägeneinrichtung mit Führungsbohrer 14, Lochsäge 18 und Aufnahmeeinheit 16 und einer Aufnahmeeinheit einer Maschine angeordnet werden kann.

Unterseitig ist die zweite Anschlußeinheit 44.2 derartig ausgebildet, daß eine Vorsprungseinheit vorhanden ist, die in einer entsprechenden Ausnehmung einer Aufnahmeeinheit eines Werkzeuges verspannt werden kann.

Mit der erfindungsgemäßen Auswerfereinrichtung ist ein problemloses Auswerfen von innerhalb der Lochsäge verkantetem Bohrmaterial in einfacher Art und Weise möglich. Darüber hinaus können bereits verwendete Lochsägeneinrichtungen ohne großen Aufwand mit der erfindungsgemäßen Auswerfereinrichtung nachgerüstet werden.

Die Führungsprofileinheit 36.3 weist an ihrem dem Boden 22 der Lochsäge 18 zugewandten Endbereich einen überstehenden, umlaufenden Bund 82 auf, der parallel zur Längsachse 12 vorhandene Durchgangsausnehmungen 84 aufweist, in denen die Auswerferstifte 32 längsverschieblich geführt sind.

Desweiteren besitzt die Führungsprofileinheit 36.3 am gegenüberliegenden Endbereich eine Vorsprungseinheit 89 mit einem Außengewinde 86, in dem eine Mutter 88 kämmt. Innenseitig ist bei der Verschiebeeinheit 38.3 ein umlaufender Anschlag 56 vorhanden, an den die Mutter 88 in Ruheposition anschlägt. Durch Drehen der Mutter 88 um die Achse 12 führt diese eine Verschiebebewegung in Richtung der Achse 12 durch, wodurch die Ruheposition zwischen Schiebeeinheit 38.3/Auswerfereinheit 32 und der Führungsprofileinheit 36.3 eingestellt werden kann, derart, daß in Ruheposition die Auswerferstifte 32 durch die Ausnehmungen 49 im Boden 22 der Lochsäge 18 in deren Inneres geringfügig hineinragen, so daß die Auswerferstifte 32 gleichzeitig eine gewisse Mitnehmerfunktion ausüben. Der in diesem Endbereich vorhandene Bund 82 vermindert die Beanspruchung der Auswerferstifte 32 bezüglich deren Mitnehmerfunktion.

Im Bereich zwischen der Mutter 88 und der Führungsprofileinheit 36.3 ist ein elastisches Element 91 eingelegt.

Die Ruheposition ist in Fig. 1 mit durchgezogenen Linien dargestellt. Desweiteren ist mit gestrichelten Linien einerseits die Auswurfposition der Auswerfereinrichtung 32 nach oben verschoben dargestellt, in der die Lochsäge 18 gelöst werden kann.

Zur Arretierung der Lage zwischen Schiebeeinheit 38.3 und Führungsprofileinheit 36.3 greift in die umlaufende Nut 54 der Führungsprofileinheit 36.3 ein unter der Wirkung einer Feder 81 stehendes Kugelelement 83 ein. Zum Ausstoßen des ausgesägten Bohrgutes wird die Verschiebeeinheit 38.3 in Pfeilrichtung L gemäß Fig. 1 nach unten bewegt (gestrichtelte Darstellung) und das Bohrgut wird ausgeworfen. Zum Lösen der Lochsäge 18 wird die Mutter 88 gedreht, bis sie die in Fig.1 gestrichtelt dargestellte Position einnimmt. Dann kann die Schiebeeinheit 38.3 entgegen der Richtung L in Fig. 1 nach oben verschoben werden, bis die Mutter 88 wieder am Anschlag 56 anschlägt. In dieser Position sind die Auswerferstifte 32 aus den Ausnehmungen 49 des Bodens 22 der Lochsäge 18 ausgefahren und die Lochsäge 18 kann durch Drehen von der Vorrichtung gelöst werden.

## Patentansprüche

1. Auswerfereinrichtung (30.3) für eine Lochsägeneinrichtung (10.3), die um eine Drehachse (12) mittels Maschinen wie Handbohr-, Säulenbohr-, Drehmaschinen, Bohranlagen oder dergleichen Werkzeugmaschinen rotierend antreibbar ist, wobei die Lochsägeneinrichtung (10.3) folgende Merkmale besitzt:
- gegebenenfalls ein, um die Drehachse (12) drehbares zentrales Führungs- beziehungsweise Zentrierelement, insbesondere Bohrer (14),
- eine Aufnahmeeinheit (16) mit Aufnahmeschaft (16.1),
- eine um die Drehachse (12) drehbare zylindrische Lochsäge (18) mit einer in Schneidrichtung (S) gesehen vorderseitigen Schneide (20) und einem rückseitigen Boden (22), und die Auswerfereinrichtung folgende Merkmale besitzt:
- eine Führungsprofileinheit (36.3), die an der Lochsägeneinrichtung (10.3) und an der Maschine direkt oder indirekt befestigbar ist,
- einer längsverschieblich an der Führungsprofileinheit (36.3) gelagerten Schiebeeinheit (38.3) und
- zumindest einer an der Schiebeeinheit (38.3) vorhandenen Auswerfereinheit (32), die den Boden (22) und/oder die Wandung der Lochsägeneinheit (10.3) durchdringt, wobei die vordere Stirnfläche (34) der Auswerfereinheit (32) auf das innerhalb der Lochsäge (18) befindliche Material bei Betätigung der Auswerfereinrichtung (30.3) schiebend einwirkt, wobei
- die Führungsprofileinheit (36.3) als ein um die Drehachse (12) drehbar anordenbares Stabprofil, insbesondere Stabrundprofil, ausgebildet ist mit einer ersten Anschlußeinheit (42.1) zum Anschließen an die Lochsägeneinrichtung (10) und einer zweiten Anschlußeinheit (44.1) zum direkten oder indirekten Anschließen einer Maschine,
- die Führungsprofileinheit (36.3) in ihrem der Lochsäge (18) zugewandten Endbereich eine Vorsprungseinheit (82) mit durchgehenden Ausnehmungen (84) zum Führen der Auswerfereinheit beziehungsweise der Auswerferstifte (32) besitzt,
**dadurch gekennzeichnet, daß**
- die Schiebeeinheit (38.3) als eine das Stabprofil umgebende Schiebehülse ausgebildet ist,
- die relative Position zwischen Schiebeeinheit (38.3) und Führungsprofileinheit (36.3) einstellbar und lösbar fixierbar ist, wobei
- die Schiebeeinheit als Schiebehülse (38.3) innenseitig einen Anschlag (56) besitzt, an dem in Ruheposition eine auf einem Gewinde (86) der Führungsprofileinheit (36.3) vorhandene Mutter (88) anschlägt.

2. Einrichtung nach Anspruch 1,
**dadurch gekennzeichnet, daß**
die Stirnfläche als Ringeinheit, Flächeneinheit, Gittereinheit, insbesondere als teilkreis- oder kreisringförmige Scheibe, ausgebildet ist.

3. Einrichtung nach Anspruch 1 und/oder 2,
**dadurch gekennzeichnet, daß**
die erste Anschlußeinheit (42.2) eine Aufnahme (74) für den Schaft (16.1) einer Aufnahmeeinheit (16) eines Führungs- oder Zentrierelements, insbesondere Bohrers (14) mit Lochsäge (18) aufweist und die zweite Anschlußeinheit (44.2) einen Schaft (52) zum Einspannen in einer Aufnahmeeinheit (50) einer Maschine aufweist.

4. Einrichtung nach einem oder mehreren der Ansprüche 1 bis 3,
**dadurch gekennzeichnet, daß**
die Schiebeeinheit und/oder die Auswerfereinheiten aus Metall, Gummi oder Kunststoff bestehen.

5. Einrichtung nach einem oder mehreren der Ansprüche 1 bis 4,
**dadurch gekennzeichnet, daß**
die als Auswerferstifte (32) ausgebildeten Ausnehmungseinheiten (32) so angeordnet sind, daß sie die im Boden (22) der Lochsäge (18) üblicherweise vorhandenen Mitnehmerausnehmungen (43) durchdringen.

6. Einrichtung nach einem oder mehreren der Ansprüche 1 bis 5,
**dadurch gekennzeichnet, daß**
die Schiebeeinheit zumindest bereichsweise einen Bereich erhöhter Oberflächenrauhigkeit, insbesondere Riffelung, Rillung, Noppung oder dergleichen, aufweist.

7. Einrichtung nach einem oder mehreren der Ansprüche 1 bis 6,
**dadurch gekennzeichnet, daß**
die Schiebehülse (38) manuell verschiebbar ausgebildet ist.

8. Einrichtung nach einem oder mehreren der Ansprüche 1 bis 7,
**dadurch gekennzeichnet, daß**
die Schiebehülse mittels des Einsatzes elektromechanischer, pneumatischer oder hydraulischer Aggregate verschiebbar ausgebildet ist.

9. Einrichtung nach einem oder mehreren der vorstehenden Ansprüche,
**dadurch gekennzeichnet, daß**
die Auswerfereinheit (32) mit ihrer Stirnfläche (34) vom Niveau des Bodens (22) bis über das Niveau der Schneide (20) der Lochsäge (18) hinaus verschiebbar ist.

10. Einrichtung nach Anspruch 1,
**dadurch gekennzeichnet, daß**
die Vorsprungseinheit (82) als umlaufender Bund ausgebildet ist.

11. Einrichtung nach Anspruch 1,
**dadurch gekennzeichnet, daß**
die Ruheposition so eingestellt ist, daß die Auswerfereinheit (32) gerade in die Ausnehmungen (49) am Boden (22) der Lochsäge (18) hineinragt.

## Claims

1. Ejector device (30.3) for a hole saw device (10.3) which can be rotationally driven about a rotation axis (12) by means of machines such as portable drills, pillar drilling machines, lathes, drilling installations or such machine tools, the hole saw device (10.3) having the following features:
- if need be a central guide unit or centring unit, in particular a drill (14), rotatable about the rotation axis (12),
- a mounting unit (16) with mounting shank (16.1),
- a cylindrical hole saw (18) rotatable about the rotation axis (12) and having, as viewed in the cutting direction (S), a front cutting edge (20) and a rear base (22),
and the ejector device having the following features:
- a guide profile unit (36.3) which can be fastened directly or indirectly to the hole saw device (10.3) and to the machine,
- a sliding unit (38.3) mounted on the guide profile unit (36.3) in a longitudinally displaceable manner, and
- at least one ejector unit (32) which is present on the sliding unit (38.3) and passes through the base (22) and/or the wall of the hole saw unit (10.3), the front end face (34) of the ejector unit (32) acting in a sliding manner on the material located inside the hole saw (18) when the ejector device (30.3) is actuated, in which arrangement
- the guide profile unit (36.3) is designed as a bar profile, in particular a round bar profile, which can be arranged so as to be rotatable about the rotation axis (12) and has a first connecting unit (42.1) for connecting to the hole saw device (10) and a second connecting unit (44.2) for the direct or indirect connection of a machine,
- the guide profile unit (36.3), in its end region facing the hole saw (18), has a projecting unit (82) with continuous apertures (84) for guiding the ejector unit or ejector pins (32),
**characterized in that**
- the sliding unit (38.3) is designed a sliding sleeve surrounding the bar profile,
- the relative position between sliding unit (38.3) and guide profile unit (36.3) can be set and releasably fixed, in which case
- the sliding unit, as sliding sleeve (38.3), has a stop (56) on the inside, against which a nut (88) on a thread (86) of the guide profile unit (36.3) runs in the rest position.

2. Device according to Claim 1, **characterized in that** the end face is designed as a ring unit, surface unit, lattice unit, in particular as a segmental circular disc or annular disc.

3. Device according to Claim 1 and/or 2, **characterized in that** the first connection unit (42.1) has a receptacle (74) for the shank (16.1) of a mounting unit (16) of a guide element or centring element, in particular a drill (14) with hole saw (18), and the second connecting unit (44.2) has a shank (52) for clamping in a mounting unit (50) of a machine.

4. Device according to one or more of Claims 1 to 3, **characterized in that** the sliding unit and/or the ejector units are made of metal, rubber or plastic.

5. Device according to one or more of Claims 1 to 4, **characterized in that** the ejector units (32), designed as ejector pins (32), are designed in such a way that they pass through the driver apertures (49) normally present in the base (22) of the hole saw (18).

6. Device according to one or more of Claims 1 to 5, **characterized in that** at least regions of the sliding unit have increased surface roughness, in particular fluting, grooving, studding or the like.

7. Device according to one or more of Claims 1 to 6, **characterized in that** the sliding sleeve (38) is designed to be manually displaceable.

8. Device according to one or more of Claims 1 to 7, **characterized in that** the sliding sleeve is designed to be displaceable by means of the use of electromechanical, pneumatic or hydraulic units.

9. Device according to one or more of the preceding claims, **characterized in that** the ejector unit (32) with its end face (34) can be displaced from the level of the base (22) to beyond the level of the cutting edge (20) of the hole saw (18).

10. Device according to Claim 1, **characterized in that** the projecting unit (82) is designed as an encircling collar.

11. Device according to Claim 1, **characterized in that** the rest position is set in such a way that the ejector unit (32) projects precisely into the apertures (49) at the base (22) of the hole saw (18).

## Revendications

1. Dispositif d'éjection (30.3) pour un ensemble de scie d'entrée (10.3) pouvant être entraîné de façon rotative autour d'un axe de rotation (12) au moyen de machines telles que des perceuses à main, des perceuses sur colonne, des tours, des ensemble d'alésage ou des machines-outils similaires, l'ensemble de scie d'entrée (10.3) possédant les caractéristiques suivantes :
- le cas échéant un élément central de guidage ou de centrage pouvant pivoter autour de l'axe de rotation (12), notamment un foret (14),
- une unité de logement (16) avec une tige de logement (16.1),
- une scie d'entrée (18) cylindrique pouvant tourner autour de l'axe de rotation (12), munie d'une lame (20) frontale et d'un fond (22) arrière vus dans le sens de coupe (S), et le dispositif d'éjection possédant les caractéristiques suivantes :
- une unité de profil de guidage (36.3) pouvant être fixée directement ou indirectement sur l'ensemble de scie d'entrée (10.3) et sur la machine,
- une unité de poussée (38.3) placée de façon déplaçable longitudinalement sur l'unité de profil de guidage (36.3) et
- au moins une unité d'éjection (32) présente sur l'unité de poussée (38.3) qui traverse le fond (22) et/ou la paroi de l'ensemble de scie d'entrée (10.3), la surface frontale avant (34) de l'unité d'éjection (32) agissant en poussant sur le matériau se trouvant dans la scie d'entrée (18) lors de l'actionnement du dispositif d'éjection (30.3),
- l'unité de profil de guidage (36.3) étant formée comme bâton profilé pouvant être placé de façon à pouvoir tourner autour de l'axe de rotation (12), notamment un bâton profilé rond, et munie d'une première unité de raccordement (42.1) pour le raccordement à l'ensemble de scie d'entrée (10) et d'une seconde unité de raccordement (44.1) pour le raccordement direct ou indirect à une machine,
- l'unité de profil de guidage (36.3) possédant, dans sa partie terminale tournée vers la scie d'entrée (18), une unité d'avancée (82) avec des évidements (84) la traversant pour le guidage de l'unité d'éjection ou des tiges d'éjection (32),
**caractérisé en ce que**
- l'unité de poussée (38.3) est formée comme un manchon coulissant entourant le bâton profilé,
- la position relative entre l'unité de poussée (38.3) et l'unité de profil de guidage (36.3) peut être fixée de façon réglable et amovible,
- l'unité de poussée comme manchon coulissant (38.3) possédant une butée (56) à l'intérieur, contre laquelle un écrou (88), présent sur un filetage (86) de l'unité de profil de guidage (36.3), vient buter en position de repos.

2. Dispositif selon la revendication 1, **caractérisé en ce que** la surface frontale est formée comme une unité annulaire, une unité de surface, une unité de grille, notamment comme un disque en forme d'arc de cercle ou de couronne.

3. Dispositif selon la revendication 1 et/ou 2, **caractérisé en ce que** la première unité de raccordement (42.2) présente un logement (74) pour la tige (16.1) d'une unité de logement (16) d'un élément de guidage ou de centrage, notamment d'un foret (14) avec une scie d'entrée (18), et que la seconde unité de raccordement (44.2) présente une tige (52) pour le montage dans une unité de logement (50) d'une machine.

4. Dispositif selon l'une ou plusieurs des revendications 1 à 3, **caractérisé en ce que** l'unité de poussée et/ou les unités d'éjection sont composées de métal, de caoutchouc ou de plastique.

5. Dispositif selon l'une ou plusieurs des revendications 1 à 4, **caractérisé en ce que** les unités d'évidement (32) formées comme des tiges d'éjection (32) sont placées de telle façon qu'elles traversent les évidements d'entraînement (43) présents généralement dans le fond (22) de la scie d'entrée (18).

6. Dispositif selon l'une ou plusieurs des revendications 1 à 5, **caractérisé en ce que** l'unité de poussée présente, au moins en partie, une partie avec une rugosité de surface augmentée, notamment un cannelage, un rainurage, un nopage ou similaire.

7. Dispositif selon l'une ou plusieurs des revendications 1 à 6, **caractérisé en ce que** le manchon coulissant (38) est formé pour être déplaçable manuellement.

8. Dispositif selon l'une ou plusieurs des revendications 1 à 7, **caractérisé en ce que** le manchon coulissant est formé de façon déplaçable en utilisant un agrégat électromécanique, pneumatique ou hydraulique.

9. Dispositif selon l'une ou plusieurs des revendications précédentes, **caractérisé en ce que** l'unité d'éjection (32) est déplaçable vers l'extérieur avec sa surface frontale (34) depuis le niveau du fond (22) jusqu'au-dessus du niveau de la lame (20) de la scie d'entrée (18).

10. Dispositif selon la revendication 1, **caractérisé en ce que** l'unité d'avancée (82) est formée comme un collet périphérique.

11. Dispositif selon la revendication 1, **caractérisé en ce que** la position de repos est réglée de telle sorte que l'unité d'éjection (32) s'étend tout juste dans les évidements (49) du fond (22) de la scie d'entrée (18).
